# EUROPÄISCHE PATENTSCHRIFT

(11) **EP 1 298 035 B1**
(45) Veröffentlichungstag und Bekanntmachung des Hinweises auf die Patenterteilung: **22.02.2006**
(21) Anmeldenummer: 02021987.9
(22) Anmeldetag: 30.09.2002
(51) Int. Cl.: B62D 25/14, B60H 1/00

(54) **Querträger für ein Kraftfahrzeug**
Cross member of a vehicle
Poutre transversale de véhicule

(30) Priorität: 01.10.2001 DE 10148523; 15.05.2002 DE 10221654
(43) Veröffentlichungstag der Anmeldung: 02.04.2003
(73) Patentinhaber: DURA Automotive Plettenberg Entwicklungs- und Vertriebs GmbH, 58840 Plettenberg (DE)
(72) Erfinder: Levermann, Ulrich, 58809 Neuenrade (DE); Gerke, Jörg, 59846 Sundern (DE)
(74) Vertreter: Zinnecker, Armin

(56) Entgegenhaltungen:
- EP-A- 0 546 671
- EP-A- 0 827 894
- EP-A- 0 934 865
- EP-A- 0 990 578
- EP-A- 1 160 147
- WO-A-98/52814
- DE-A- 4 232 847
- DE-A- 19 738 830
- US-A- 5 492 388

## Beschreibung

Die Erfindung betrifft einen Querträger für ein Kraftfahrzeug.

Derartige Querträger dienen dazu, die A-Säulen oder andere Bauteile an den Seiten eines Kraftfahrzeugs miteinander zu verbinden. Sie können zusätzlich mit dem Tunnel und/oder der Stirnwand verbunden sein.

Aus der DE 197 15 069 C2, auf die Bezug genommen wird, ist ein derartiger Querträger bekannt. Er befindet sich zwischen zwei seitlichen Randbereichen einer Fahrzeugstruktur. Der Querträger ist in wenigstens zwei miteinander lösbar in Verbindung stehende Teilabschnitte unterteilt. Durch die Unterteilung des Querträgers in zwei oder mehr Teilabschnitte können die Transportmöglichkeiten des gesamten Konstruktionselements verbessert werden, weil die Unterteilung auch im Hinblick auf eine Minimierung des benötigten Frachtvolumens vorgenommen werden kann. Der Querträger nach DE 197 15 069 C2 erstreckt sich im wesentlichen in der Höhe der Unterkante der vorderen Windschutzscheibe des Kraftfahrzeugs. Er ist rohrartig ausgebildet und mit den A-Säulen auf beiden Seiten des Kraftfahrzeugs verbunden.

Aus der DE 42 32 846 A1, auf die ebenfalls Bezug genommen wird, ist ein weiterer Querträger bekannt. Dieser Querträger erstreckt sich über die Breite des Kraftfahrzeug-Innenraumes und besteht aus drei Leichtmetall-Strangpreßteilen, nämlich zwei Seitenteilen mit einem geschlossenen Kastenprofil und einem mit diesen verschweißten Mittelteil mit einem etwa L-förmigen Querschnitt, welches die inneren Enden der Seitenteile überlappt. Der Querträger ist an den A-Säulen der Fahrzeugkarosserie befestigt.

Aus der EP 0 546 671 A1, auf die ebenfalls Bezug genommen wird, ist ein weiterer Querträger bekannt.

Aus der WO 98/52814 A ist ein Querträger für ein Kraftfahrzeug nach dem Oberbegriff des Anspruchs 1 bekannt.

Aus der DE 197 38 830 A1 ist ein Querträger für ein Kraftfahrzeug bekannt, der als Träger für im Bereich des Cockpits angeordnete Funktionseinheiten wie z.B. ein beifahrerseitiges Airbag-Modul dient. Der Querträger kann eine Stütze aufweisen, über die der fahrerseitige Querträgerabschnitt mit dem Mitteltunnel verbindbar ist.

Aufgabe der Erfindung ist es, einen verbesserten Querträger der eingangs angegebenen Art vorzuschlagen.

Erfindungsgemäß wird diese Aufgabe durch die Merkmale des Anspruchs 1 gelöst. Der Querträger umfaßt einen Halter zum Befestigen der Lenksäule, der Pedallerie und/oder anderer in diesem Bereich befindlicher Teile. Bei diesen Teilen kann es sich insbesondere um einen oder mehrere Modulträger, den Lenkstockhebel, die Lenkung, eines oder mehrere Steuergeräte und/oder einen oder mehrere Kniefänger handeln. Ferner ist eine Verstärkung vorgesehen, die als ein durchgehendes Bauteil bzw. Rohr zwischen Tunnel und A-Säule ausgeführt ist. Dadurch erhöht sich die dynamische und statische Steifigkeit, was zu einer Erhöhung des Fahrkomforts führen kann.

Vorteilhafte Weiterbildungen der Erfindung sind in den Unteransprüchen beschrieben.

Die Verstärkung ist vorzugsweise auf der Fahrerseite vorgesehen.

Die Verstärkung kann als Rohr ausgestaltet sein. Das Rohr kann einen kreisrunden oder runden Querschnitt aufweisen. Möglich sind allerdings auch andere Querschnitte, beispielsweise ein Profilquerschnitt.

Vorzugsweise ist die Verstärkung durch Biegen oder Streckbiegen hergestellt.

Nach einer weiteren vorteilhaften Weiterbildung ist die Verstärkung als Gußteil oder als Schweißunterbaugruppe oder als Hybrit ausgeführt.

Vorteilhaft ist es, wenn an dem Halter die Lenksäule, die Pedallerie und ein oder mehrere Modulträger befestigbar oder befestigt sind. In diesem Fall ermöglicht es der Halter, Lenksäule, Pedallerie und Moduiträger über eine Schnittstelle miteinander zu verbinden.

Die Befestigungen der Lenksäule, der Pedallerie und/oder des oder der Modulträger kann durch Schweißverbindungen und/oder Klebeverbindungen und/oder andere Verbindungen erfolgen.

Der Querträger ist vorzugsweise aus zwei Halbschalen gefertigt.

Eine weitere vorteilhafte Weiterbildung ist dadurch gekennzeichnet, daß der Querträger in Z-Richtung und/oder in Y-Richtung verschiebbar ist. Der Querträger kann während des Einbaus im Fahrzeug in Z-Richtung und/oder in Y-Richtung verschoben und danach endgültig fixiert werden. Dabei ist es vorteilhaft, wenn der Querträger in Y-Richtung und/oder in X-Richtung befestigbar, insbesondere verschraubbar, ist.

Vorzugsweise sind Ausgleichselemente zum Toleranzausgleich vorgesehen.

Nach einer weiteren vorteilhaften Weiterbildung ist eine Luftführung mit dem Querträger verbunden. Die Luftführung liegt vorzugsweise in dem Querträger. Dies ist insbesondere dann von Vorteil, wenn der Querträger aus zwei Halbschalen gefertigt ist. Vorzugsweise ist die Luftführung mit dem Querträger verklebt.

Ein Ausführungsbeispiel der Erfindung wird nachstehend anhand der beigefügten Zeichnung im einzelnen erläutert. In der Zeichnung zeigt
- Fig. 1: einer nicht erfindungsgemäßen Querträger in einer perspektivischen Ansicht,
- Fig. 2: den nicht erfindungsgemäßen Querträger gemäß Fig. 1 einschließlich der Lenksäule und der Pedallerie,
- Fig. 3: eine als Rohr ausgestaltete Verstärkung für den Querträger in einer perspektivischen Ansicht,
- Fig. 4: die Verstärkung gemäß Fig. 3 im teilweise montierten Zustand,
- Fig. 5: die Verstärkung gemäß Fig. 3 und 4 mit weiteren Montageteilen,
- Fig. 6: die Verbindung des Querträgers mit der A-Säule auf der Fahrerseite,
- Fig. 7: die Verbindung des Querträgers mit der A-Säule auf der Beifahrerseite,
- Fig. 8: die Verbindung der als Rohr ausgestalteten Verstärkung mit einer Halbschale des Querträgers,
- Fig. 9: einen Querschnitt des aus zwei Halbschalen bestehenden Querträgers und
- Fig. 10: eine in dem Querträger liegende Luftführung in einer perspektivischen Ansicht.

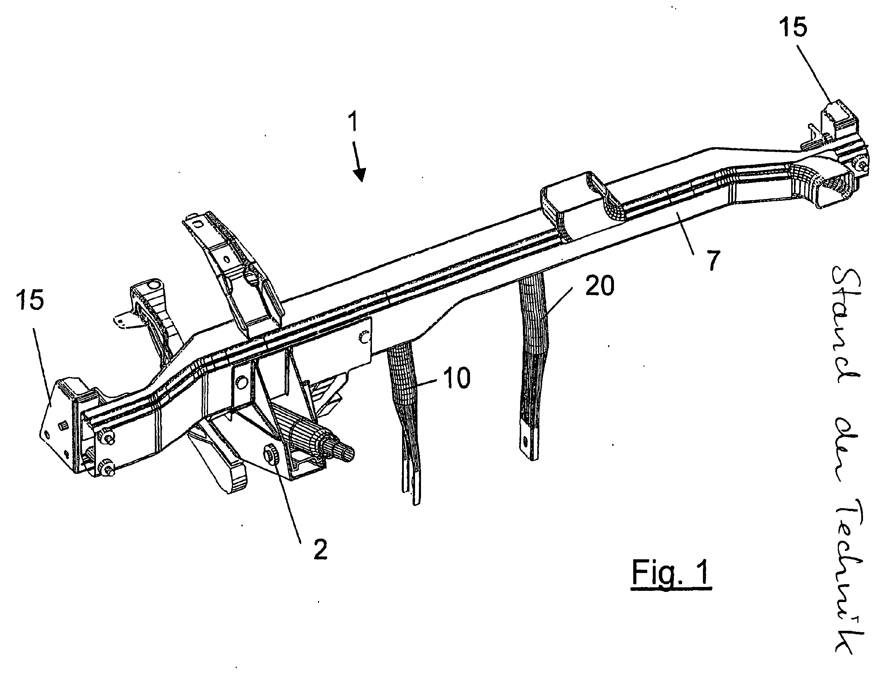

In Fig. 1 ist ein nicht erfindungsgemäßen Querträger 1 dargestellt. An diesem Querträger 1 ist ein Halter 2 befestigt, an den die Lenksäule, die Pedallerie und ein Modulträger befestigbar sind. Dementsprechend kann der Halter 2 als integrierter Pedallerie- und Lenksäulen-Halter bezeichnet werden. Er ist mit mehreren Schrauben an dem Querträger 1 befestigt und zusätzlich nach der Verschraubung verklebt. An dem Halter sind ferner Preßbolzen zum Befestigen anderer Komponenten wie beispielsweise Sicherungskasten, ECU etc., vorhanden.

Der in Fig. 1 gezeigte Teilabschnitt ist in dieser Form vormontiert.

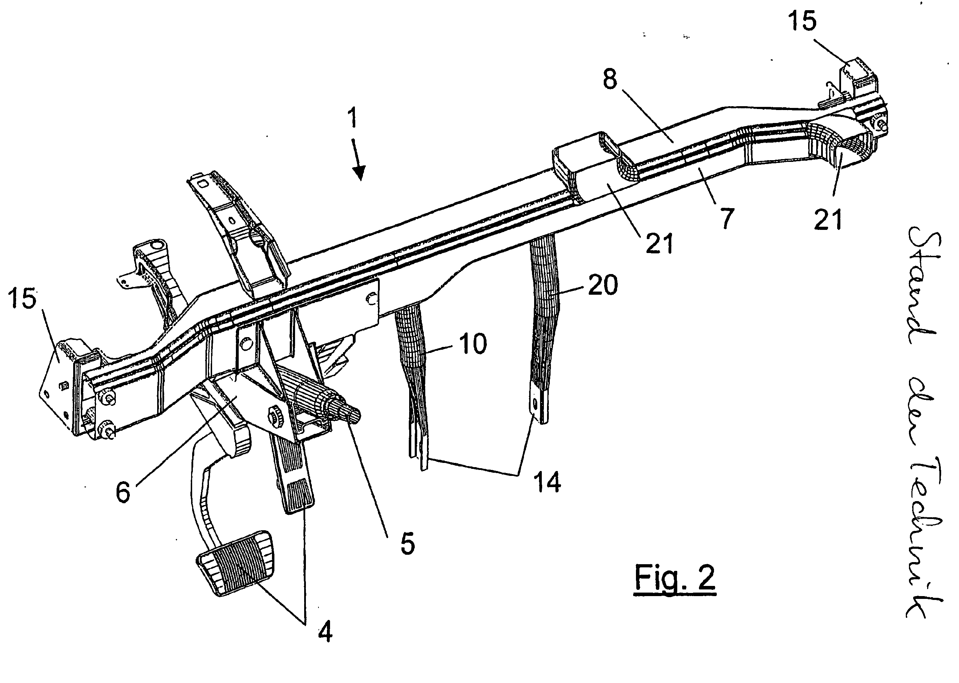

In Fig. 2 ist die Pedalterie 4 und die Lenksäule 5 über ein integrierendes Befestigungselement 6 an dem Halter 2 befestigt.

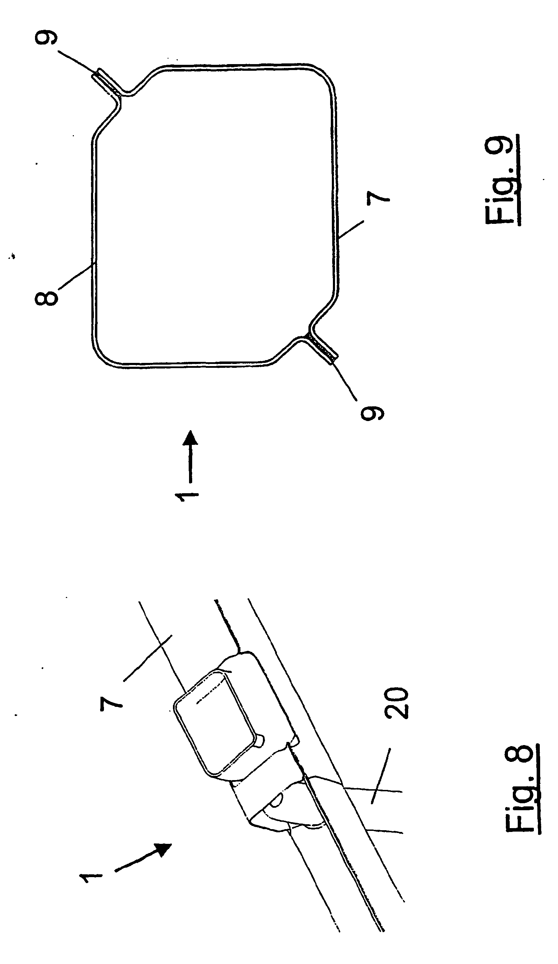

Der Querträger 1 besteht in der aus Fig. 9 ersichtlichen Weise aus einer unteren Halbschale 7 und einer oberen Halbschale 8, die an ihren einander zugewandten Enden Laschen aufweisen, die durch einen Klebstoff 9 miteinander verklebt sind.

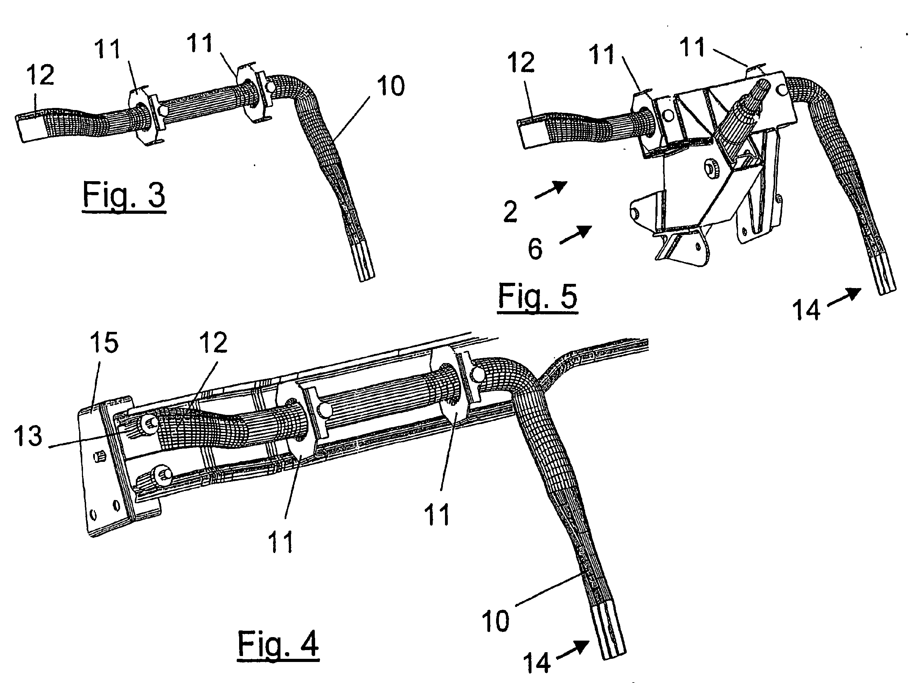

In den Figuren 3 bis 5 ist eine als Rohr ausgebildete Verstärkung 10 dargestellt. Die Figur 3 zeigt die vormontierte Einheit, bestehend aus der Verstärkung 10 und zwei Haltern 11, mit denen diese Einheit in der aus Fig. 4 ersichtlichen Weise mit dem Querträger 1 verbunden werden kann. Ferner wird das Ende 12 der Verstärkung 10 mit dem Querträger 1 verbunden, insbesondere verschraubt 13. Die Figur 5 zeigt die Anordnung mit dem Halter 2 und dem integrierenden Befestigungselement 6.

Wie aus den Figuren 1 bis 5 ersichtlich ist die als Rohr ausgestaltete Verstärkung 10 ein durchgehendes Bauteil zwischen Tunnel 14 und A-Säule 15. Das dem Ende 12 gegenüberliegende Ende der Verstärkung 10 ist eine Tunnelverstärkung. Das Ende 12 der Verstärkung 10 liegt im Bereich der Befestigungsvorrichtung für die A-Säule 15. Das Rohr der Verstärkung 10 weist einen im wesentlichen runden Querschnitt auf. Die Verstärkung 10 ist daraus durch Biegen oder Streckbiegen hergestellt.

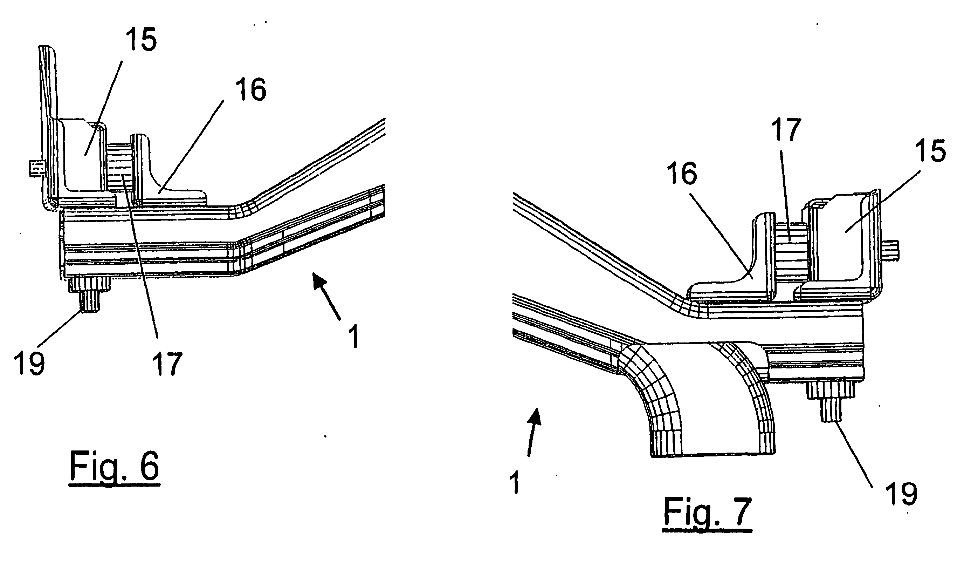

Die Figur 6 zeigt Montageelemente zum Befestigen des Querträgers 1 an der A-Säule 15 auf der Fahrerseite. Mit dem Querträger 1 ist ein Winkel 16 verbunden, an dem ein Toleranzausgleichselement 17 vorgesehen ist, welches einen Toleranzausgleich in Y-Richtung ermöglicht. Der Querträger 1 wird durch eine Schraubverbindung 19 in X-Richtung mit der A-Säule 15 verschraubt. Ferner besteht eine Verschiebemöglichkeit in Z-Richtung. Nach der Verschiebung in Y-Richtung erfolgt eine Verschraubung in dieser Richtung.

Die Figur 7 zeigt eine entsprechende Befestigung mit der A-Säule der Beifahrerseite, wobei entsprechende Bauteile mit entsprechenden Bezugszeichen versehen sind.

Die Figur 8 zeigt die Verbindung einer als Rohr ausgestalteten Verstärkung 20 auf der Beifahrerseite, die mit der unteren Halbschale 7 des Querträgers 1 verbunden ist. Das deformierte Ende der Verstärkung 20 wird mit der oberen Halbschale 8 verklebt.

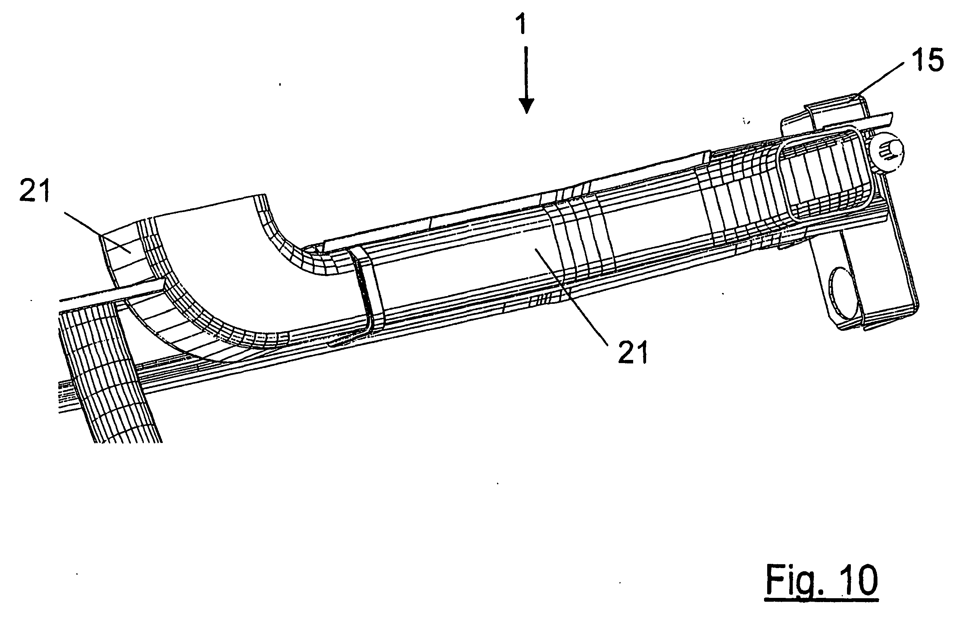

Fig. 10 zeigt eine Luftführung 21, die mit dem Querträger 1 verbunden ist. Die Luftführung 21 liegt in dem Querträger 1. Sie ist mit den Halbschalen 7 und 8 des Querträgers 1 verklebt.

Bei dem erläuterten Ausführungsbeispiel ist ein Halter vorhanden, der es ermöglicht, Pedallerie, Lenksäule und Modulträger über eine Schnittstelle (integrierendes Befestigungselement 6) miteinander zu verbinden. Der Halter kann als Gußteil (Al oder Mg oder St) oder als Schweißunterbaugruppe (Al oder St) oder als Hybrit ausgeführt sein. Die Verbindung zu den Anbauteilen kann über Schweißverbindungen, Klebeverbindungen oder andere Verbindungen erfolgen.

Als Verstärkungen 10, 20 werden Rohre verwendet. Zur Versteifung auf der Fahrerseite wird ein durchgehendes Rohr 10 zwischen Tunnel 14 und A-Säule 15 eingesetzt. Dadurch erhöht sich die Steifigkeit. Die Verstärkung ist als gebogenes Rohr oder Profil aus Al oder St oder einem sonstigen geeigneten Werkstoff ausgeführt. Als Fertigungsverfahren kommen Biegen oder Streckbiegen oder auch andere Fertigungsverfahren in Betracht.

Die dargestellte Art der Befestigung im Bereich der A-Säule ermöglicht es, das Modul während des Einbaus im Fahrzeug in Z-Richtung und Y-Richtung zu verschieben und danach endgültig zu fixieren. Durch Ausgleichselemente ist eine Verschraubung in Y-Richtung und X-Richtung möglich. Hierdurch wird eine Versteifung und somit eine Verbesserung der Steifigkeit erreicht.

Die Luftführung ist als Kunststoffkanal ausgestaltet. In Verbindung mit der Klebetechnologie ist es möglich, ohne eine Deformation des Kunststoffkanals die Teile zu fügen. Gleichzeitig kann durch zusätzliche Fügestellen die Gesamtstruktur versteift werden.

## Patentansprüche

1. Querträger für ein Kraftfahrzeug mit einem Halter (2) zum Befestigen der Lenksäule (5), der Pedallerie (4) und/oder anderer in diesem Bereich befindlicher Teile,
**gekennzeichnet durch**
eine Verstärkung (10, 20), die als durchgehendes Bauteil zwischen Tunnel (14) und A-Säule (15) ausgeführt ist.

2. Querträger nach Anspruch 1, **dadurch gekennzeichnet, daß** die Verstärkung (10) auf der Fahrerseite vorgesehen ist.

3. Querträger nach Anspruch 1 oder 2, **dadurch gekennzeichnet, daß** die Verstärkung (10, 20) als Rohr ausgestaltet ist.

4. Querträger nach einem der vorhergehenden Ansprüche, **dadurch gekennzeichnet daß** die Verstärkung (10, 20) durch Biegen oder Streckbiegen hergestellt ist.

5. Querträger nach einem der Ansprüche 1 bis 3, **dadurch gekennzeichnet, daß** die Verstärkung (10, 20) als Gußteil oder als Schweißunterbaugruppe oder als Hybrit ausgeführt ist.

6. Querträger nach einem der vorhergehenden Ansprüche, **dadurch gekennzeichnet, daß** an dem Halter (2) die Lenksäule (5), die Pedallerie (4) und ein oder mehrere Modulträger befestigbar oder befestigt sind.

7. Querträger nach einem der vorhergehenden Ansprüche, **dadurch gekennzeichnet, daß** die Befestigung durch Schweißverbindungen und/oder Klebeverbindungen erfolgt.

8. Querträger nach einem der vorhergehenden Ansprüche, **dadurch gekennzeichnet, daß** der Querträger (1) aus zwei Halbschalen (7, 8) gefertigt ist.

9. Querträger nach einem der vorhergehenden Ansprüche, **dadurch gekennzeichnet, daß** der Querträger (1) in Z-Richtung und/oder in Y-Richtung verschiebbar ist.

10. Querträger nach Anspruch 9, **dadurch gekennzeichnet, daß** der Querträger (1) in Y-Richtung und/oder in X-Richtung befestigbar, insbesondere verschraubbar, ist.

11. Querträger nach Anspruch 9 oder 10, **gekennzeichnet durch** Ausgleichselemente zum Toleranzausgleich.

12. Querträger nach einem der vorhergehenden Ansprüche, **dadurch gekennzeichnet, daß** eine Luftführung (21) mit dem Querträger (1) verbunden ist.

13. Querträger nach Anspruch 12, **dadurch gekennzeichnet, daß** die Luftführung (21) in dem Querträger (1) liegt.

14. Querträger nach Anspruch 12 oder 13, **dadurch gekennzeichnet, daß** die Luftführung (21) mit dem Querträger (1) verklebt ist.

## Claims

1. Cross member of a vehicle, having a holder (2) for securing the steering column (5), the foot controls (4) and/or other parts situated in this region, **characterized by** a reinforcement (10, 20) which is designed as a continuous component between tunnel (14) and A-pillar (15).

2. Cross member according to Claim 1, **characterized in that** the reinforcement (10) is provided on the driver's side.

3. Cross member according to Claim 1 or 2, **characterized in that** the reinforcement (10, 20) is configured as a tube.

4. Cross member according to one of the preceding claims, **characterized in that** the reinforcement (10, 20) is produced by bending or stretch-bending.

5. Cross member according to one of Claims 1 to 3, **characterized in that** the reinforcement (10, 20) is designed as a cast part or as a welding subassembly or as a hybrid.

6. Cross member according to one of the preceding claims, **characterized in that** the steering column (5), the foot controls (4) and one or more module carriers can be secured or are secured on the holder (2).

7. Cross member according to one of the preceding claims, **characterized in that** the securing takes place by means of welding connections and/or adhesive connections.

8. Cross member according to one of the preceding claims, **characterized in that** the cross member (1) is manufactured from two half shells (7, 8).

9. Cross member according to one of the preceding claims, **characterized in that** the cross member (1) can be displaced in the Z-direction and/or in the Y-direction.

10. Cross member according to Claim 9, **characterized in that** the cross member (1) can be secured, in particular can be screwed, in the Y-direction and/or in the X-direction.

11. Cross member according to Claim 9 or 10, **characterized by** compensating elements to compensate for tolerances.

12. Cross member according to one of the preceding claims, **characterized in that** an air-conducting means (21) is connected to the cross member (1).

13. Cross member according to Claim 12, **characterized in that** the air-conducting means (21) is situated in the cross member (1).

14. Cross member according to Claim 12 or 13, **characterized in that** the air-conducting means (21) is adhesively bonded to the cross member (1).

## Revendications

1. Poutre transversale de véhicule avec un support (2) pour fixer la colonne de direction (5), les pédales (4) et/ou d'autres éléments se trouvant dans cette zone,
**caractérisée en**
un renforcement (10, 20), réalisé sous forme de pièce traversante entre le tunnel (14) et le pied avant (15).

2. Poutre transversale selon la revendication 1, **caractérisée en ce que** le renforcement (10) est prévu côté conducteur.

3. Poutre transversale selon l'une quelconque des revendications 1 ou 2, **caractérisée en ce que** le renforcement (10, 20) est conformé en tube.

4. Poutre transversale selon l'une quelconque des revendications précédentes, **caractérisée en ce que** le renforcement (10, 20) est réalisé par pliage ou pliage et étirage.

5. Poutre transversale selon l'une quelconque des revendications 1 à 3, **caractérisée en ce que** le renforcement (10, 20) est réalisé sous forme de pièce moulée ou de sous-groupe soudé ou de pièce hybride.

6. Poutre transversale selon l'une quelconque des revendications précédentes, **caractérisée en ce que** la colonne de direction (5), les pédales (4) et un ou plusieurs supports de module sont ou peuvent être fixés au support (2).

7. Poutre transversale selon l'une quelconque des revendications précédentes, **caractérisée en ce que** la fixation peut être réalisée à l'aide de raccordements soudés et/ou collés.

8. Poutre transversale selon l'une quelconque des revendications précédentes, **caractérisée en ce que** la poutre transversale (1) est de préférence constituée de deux demi-coques (7, 8).

9. Poutre transversale selon l'une quelconque des revendications précédentes, **caractérisée en ce que** la poutre transversale (1) peut être déplacée dans la direction Z et/ou dans la direction Y.

10. Poutre transversale selon la revendication 9, **caractérisée en ce que** la poutre transversale (1) peut être fixée dans la direction Y et/ou X, et en particulier vissée.

11. Poutre transversale selon l'une quelconque des revendications 9 ou 10, **caractérisée en** éléments de compensation, destinés à compenser la tolérance.

12. Poutre transversale selon l'une quelconque des revendications précédentes, **caractérisée en ce qu'**un conduit d'aération (21) est raccordé à la poutre transversale (1).

13. Poutre transversale selon la revendication 12, **caractérisée en ce que** le conduit d'aération (21) se trouve de préférence dans la poutre transversale (1).

14. Poutre transversale selon l'une quelconque des revendications 12 ou 13, **caractérisée en ce que** le conduit d'aération (21) est collé sur la poutre transversale (1).
